# EUROPÄISCHE PATENTSCHRIFT

(11) **EP 1 672 450 B1**
(45) Veröffentlichungstag und Bekanntmachung des Hinweises auf die Patenterteilung: **23.01.2008**
(21) Anmeldenummer: 05020642.4
(22) Anmeldetag: 22.09.2005
(51) Int. Cl.: G05B 19/4061, B25J 9/16

(54) **Verfahren zur Ermittlung einer möglichen Kollision mindestens zweier zueinander beweglicher Objekte**
Method for determining a possible collision between at least two objects moving towards each other
Procédé de calcul d'une collision potentielle entre au moins deux objets se déplaçant l'un vers l'autre

(30) Priorität: 20.12.2004 DE 102004062163
(43) Veröffentlichungstag der Anmeldung: 21.06.2006
(73) Patentinhaber: Dr. Johannes Heidenhain GmbH, 83292 Traunreut (DE)
(72) Erfinder: Haunerdinger, Josef, 83377 Vachendorf (DE)

(56) Entgegenhaltungen:
- EP-A- 0 268 317
- EP-A- 0 412 619
- EP-A- 0 426 249
- US-A- 4 578 757
- US-A- 5 056 031

## Beschreibung

Die Erfindung betrifft ein Verfahren zur Ermittlung einer möglichen Kollision mindestens zweier zueinander beweglicher Objekte nach dem Oberbegriff des Patentanspruchs 1.

Bei einem solchen Verfahren wird eine Simulation der vorgesehenen Relativbewegung der mindestens zwei zueinander beweglichen Objekte durchgeführt, bei der zumindest einem der Objekte eine das Objekt umschließende Hülle zugeordnet wird; bei der weiterhin die Bahnkurve, die die Relativbewegung der beiden Objekte repräsentiert, mit Schritten einer definierten Schrittweite abgefahren wird; und bei der zur Ermittlung einer möglichen Kollision der Objekte das Auftreten eines Überlapps der beiden (simulierten) Objekte beim Abfahren der Bahnkurve erfasst wird, wobei zumindest bei dem einen der Objekte zur Erfassung eines Überiapps auf die äußere Kontur der zugeordneten Hülle Bezug genommen wird.

Derartige Verfahren werden verwendet zur Kollisionsüberwachung bei relativ zueinander beweglichen Maschinenteilen einer Werkzeugmaschine, wie z. B. einem Maschinentisch, einer Kabinenwand, einem Werkzeug, einem Spindelkopf und dergleichen, um mögliche Kollisionen frühzeitig zu erkennen und mittels der Maschinensteuerung vermeiden zu können.

Um die bei der Simulation der Bewegung der einzelnen Maschinenteile erforderlichen Berechnungen mit hinreichender Geschwindigkeit vornehmen zu können, werden die zu überwachenden Objekte, jedenfalls solche, die eine komplizierte geometrische Struktur aufweisen, durch eine das jeweilige Objekt umschließende Hülle repräsentiert. Die Kollisionsüberwachung erfolgt dann in der Simulation nicht anhand der tatsächlichen Geometrie der relativ zueinander beweglichen Objekte sondern vielmehr anhand der Geometrie der einem jeweiligen Objekt zugeordneten Hülle, die in der Regel aus Körpern einfacher Geometrie, wie z. B. Kugeln, Quadern, Zylindern, Prismen und Pyramiden, besteht. Somit wird bei der Durchführung der Simulation zur frühzeitigen Kollisionserkennung hinsichtlich solcher zu überwachender Objekte, denen eine Hülle einfacher Geometrie zugeordnet ist, bei der Überwachung nicht auf einen Überlapp des Objektes selbst mit einem anderen Objekt bzw. dessen Hülle abgestellt, sondern vielmehr auf einen möglichen Überlapp der dem Objekt zugeordneten Hülle mit einem anderen Objekt bzw. einer wiederum dem anderen Objekt zugeordneten anderen Hülle.

Die Bahnkurve, die die Relativbewegung zueinander beweglicher, auf Kollision zu überwachender Objekte repräsentiert, beschreibt dabei die möglichen Relativpositionen, die diese Objekte während des Ablaufs eines bestimmten, z. B. in einer Maschinensteuerung abgelegten, Steuerungsprogramms einnehmen können. Im Fall einer Werkzeugmaschine entsprechen die einzelnen Punkte der Bahnkurve also jeweils einer bestimmten Stellung der zu überwachenden Objekte bezüglich der Maschinenachsen der Werkzeugmaschine, und zwar sowohl hinsichtlich linearer Bewegungen entlang der einzelnen Maschinenachsen als auch hinsichtlich rotatorischer Bewegungen um die Maschinenachsen. Unter einer Bahnkurve wird demnach vorliegend allgemein die Menge aller derjenigen Relativpositionen verstanden, die die auf Kollision zu überwachenden Objekte bei einer definierten, z. B. durch ein Steuerungsprogramm vorgegebenen Relativbewegung einnehmen können, wobei die entsprechende Simulation zur Ermittlung einer möglichen Kollision in der Maschinensteuerung bzw. in einer mit der Maschinensteuerung gekoppelten Rechnereinheit ausgeführt wird, so dass die Maschinensteuerung ggf. durch Stoppen der Relativbewegung oder durch Änderung der Relativbewegung eine Kollision der realen, zu überwachenden Objekte verhindern kann.

Die nachfolgend verwendete Formulierung, dass zur Erfassung eines Überlapps, also eines gegenseitigen Durchdringens, zweier Objekte bei der Simulation "auf die äußere Kontur der dem jeweiligen Objekt zugeordneten Hülle Bezug genommen wird", bedeutet dabei, dass bei der Erfassung eines Überlapps bzw. eines gegenseitigen Durchdringens zweier zu überwachender (simulierter) Objekte nicht darauf Bezug genommen wird, ob die beiden Objekte in ihrer konkreten, tatsächlichen Geometrie überlappen, sondern vielmehr darauf Bezug genommen wird, ob die einem jeweiligen Objekt zugeordnete Hülle mit dem anderen Objekt oder, sofern auch diesem eine Hülle zugeordnet ist, mit der dem anderen Objekt zugeordneten Hülle überlappt. In dem Fall, in dem beiden zu überwachenden Objekten jeweils eine Hülle zugeordnet ist, wird also auf das gegenseitige Durchdringen der beiden Hüllen abgestellt. Sofern nur einem der beiden Objekte eine Hülle zugeordnet ist, wird auf den Überlapp dieser Hülle mit dem anderen Objekt abgestellt.

Ein Verfahren zur Kollisionsüberwachung der vorbeschriebenen Art ist beispielsweise aus der EP 0 268 317 A2 sowie der US 5,056,031 bekannt.

Es besteht hierbei das Problem, dass zur zuverlässigen Erkennung einer möglichen Kollision zweier zueinander beweglicher Objekte die Bahnkurve, die die Relativpositionen der zu überwachenden Objekte repräsentiert, mit einer möglichst kleinen Schrittweite abgefahren werden muss, da bei Verwendung einer zu großen Schrittweite gerade solche Punkte der Bahnkurve übersprungen werden könnten, an denen die Gefahr einer Kollision besteht. Dies steht im Widerspruch zu dem Bedürfnis, die Kollisionsüberwachung mit möglichst wenig Rechenzeit durchzuführen.

Der Erfindung liegt daher das Problem zugrunde, ein Verfahren zur Kollisionsüberwachung der eingangs genannten Art weiter zu verbessern.

Dieses Problem wird erfindungsgemäß durch die Schaffung eines Verfahrens mit den Merkmalen des Patentanspruchs 1 gelöst.

Danach wird bei der Simulation zumindest einem der zu überwachenden Objekte eine innere und eine äußere Hülle zugeordnet, von denen die innere Hülle das entsprechende Objekt umgibt und von denen die äußere Hülle die innere Hülle umgibt und von dieser beabstandet ist, wobei zur Erfassung eines Überlapps der zueinander beweglichen Objekte zunächst auf die äußere Hülle zumindest des einen Objektes Bezug genommen wird und nach Feststellung eines Überlapps auf dieser Grundlage der von dem Überlapp betroffene Abschnitt der die Relativbewegung der beiden Objekte repräsentierenden Bahnkurve erneut mit einer kleineren, zweiten Schrittweite durchfahren wird und beim emeuten Durchfahren dieses Abschnittes der Bahnkurve zur Erfassung eines Überlapps auf die innere Hülle zumindest des einen Objektes Bezug genommen wird.

Die erfindungsgemäße Lösung beruht auf der Erkenntnis, dass in vielen Fällen die zu überwachenden, zueinander beweglichen Objekte einen solchen Abstand voneinander aufweisen, dass eine genaue Kollisionsüberwachung mit einer möglichst exakt an den zu überwachenden Körper angepassten Hülle und einer entsprechend kleinen Schrittweite gar nicht erforderlich ist. Stattdessen wird hier zunächst eine Grobüberwachung mit einer größeren äußeren Hülle durchgeführt, die eine entsprechend größere Schrittweite rechtfertigt. Denn bei Verwendung einer hinreichend großen Hülle zur Kollisionsüberwachung kommt es eher zu einem eine Kollisionsgefahr anzeigenden Überlapp, so dass auch bei Verwendung einer größeren Schrittweite sicher gestellt werden kann, dass keine mögliche Kollision übersehen wird. Ein geeignetes Verhältnis zwischen der Größe der äußeren Hülle bezogen auf die Größe des zu überwachenden Objektes einerseits und der zugeordneten Schrittweite andererseits ist dabei in jedem Einzelfall anhand der Eigenschaften der zu überwachenden Objekte sowie anhand der Geometrie der verwendeten Hüllkörper festzulegen.

Sowohl die aufeinander folgenden Schritte der größeren Schrittweite als auch die aufeinander folgenden Schritte der kleineren Schrittweite sind dabei so gewählt, dass sie unmittelbar aneinander anschließen. Die Schritte der großen Schrittweite überdecken die gesamte Bahnkurve, entlang der die beiden zu überwachenden Objekte zueinander bewegt werden, und zwar bevorzugt (jedoch nicht zwingend) ohne Überlapp der einzelnen, aufeinanderfolgenden Schritte. Das selbe gilt für die zweiten Schritte kleiner Schrittweite bezogen auf einen jeweiligen Teilabschnitt der Bahnkurve. Die einzelnen Schritte sind dabei jeweils diskret und endlich.

Eine Kollisionsüberwachung mit größeren, den einzelnen Objekten zugeordneten Hüllkörpern hat scheinbar den wesentlichen Nachteil, dass hierbei häufig auch dann ein Überlapp bezüglich der verwendeten Hüllkörper zu beobachten sein wird, wenn die zugeordneten Objekte selbst tatsächlich gar keinen Überlapp aufweisen. Dieser vermeintliche Nachteil wird jedoch bei dem erfindungsgemäß ausgestalteten Verfahren dadurch beseitigt, dass beim Erkennen eines Überlapps bezogen auf die größeren, äußeren Hüllkörper noch nicht automatisch vom Vorliegen einer Kollision ausgegangen wird, sondern vielmehr das Vorliegen einer Kollision nochmals überprüft wird, und zwar unter Bezugnahme auf die entsprechenden kleineren, inneren, einem jeweiligen zu überwachenden Objekt zugeordneten Hüllkörper und unter Verwendung einer entsprechend kleineren, feinstufigeren Schrittweite beim Abfahren eines solchen Abschnittes der Bahnkurve, auf dem zuvor durch einen Überlapp - bezogen auf die größere, äußere Hülle - die Gefahr einer Kollision angezeigt wurde.

Bei der nachfolgenden näheren Erläuterung des erfindungsgemäßen Verfahrens wird auf die Kollision zweier zueinander beweglicher Objekte Bezug genommen werden. Das erfindungsgemäße Verfahren ist aber selbstverständlich auch in solchen Fällen anwendbar, in denen mehr als zwei zueinander bewegliche Objekte zu überwachen sind, wobei eine Kollision immer dann anzunehmen ist, wenn die Simulation hinsichtlich zweier der zu überwachenden Objekte bzw. hinsichtlich der diesen Objekten zugeordneten Hüllen einen Überlapp anzeigt. Insofern besteht auch bei der Kollisionsüberwachung von mehr als zwei zueinander beweglichen Objekten stets das Problem, die Kollision jeweils mindestens zweier der zu überwachenden Objekte festzustellen.

Bevorzugt ist die innere Hülle von allen Punkten der äußeren Kontur des jeweils zugeordneten Objektes um einen endlichen Mindestabstand beabstandet; und die äußere Hülle ist wiederum bevorzugt von allen Punkten der zugeordneten inneren Hülle um einen endlichen Mindestabstand beabstandet, so dass die jeweilige äußere Hülle einen größeren Mindestabstand von dem zugeordneten Objekt aufweist als die jeweilige innere Hülle. Grundsätzlich ist aber nicht ausgeschlossen, dass die innere Hülle einzelne Punkte des zu überwachenden Objektes berührt und die äußere Hülle einzelne Punkte der zugeordneten inneren Hülle berührt.

Die erste, grobe Schrittweite, mit der eine mögliche Kollision der zu überwachenden Objekte in Bezug auf die äußere Hülle des jeweiligen Objektes festgestellt werden soll, wird jeweils in Abhängigkeit von dem Mindestabstand der äußeren Hülle von der äußeren Kontur des jeweils zugeordneten Objektes festgelegt. Je größer der Abstand zwischen der äußeren Hülle und dem hiervon umschlossenen, zu überwachenden Objekt ist, desto größer kann die erste Schrittweite gewählt werden, ohne dass die Gefahr besteht, eine mögliche Kollision zu übersehen.

In entsprechender Weise hängt die kleinere, zweite Schrittweite, die beim erneuten Abfahren eines als kollisionsgefährlich angesehenen Abschnittes der Bahnkurve verwendet wird, von dem Mindestabstand der inneren Hülle von dem jeweils zugeordneten zu überwachenden Objekt ab.

Ferner kann die gewählte Schrittweite auch von dem Verlauf der Bahnkurve, d. h. der Art der Relativbewegung der zu überwachenden Objekte, festgelegt werden, sowie außerdem in Abhängigkeit von der absoluten Größe der einzelnen Hüllkörper. So ist es für die Festlegung der jeweiligen Schrittweite z.B. von Bedeutung, ob es sich bei den zu überwachenden Bewegungen um Linearbewegungen oder um Rotationsbewegungen handelt, da sich bei Rotationsbewegungen in Abhängigkeit vom Radius der die Bewegung beschreibenden Bahnkurve bei ein und derselben Winkeländerung sehr unterschiedliche zurückgelegte Wegstrecken ergeben können.

Häufig wird es sich bei einer zu überwachenden Relativbewegung zweier zueinander beweglicher Objekte um eine Kombination linearer und rotatorischer Bewegungen handeln.

Insbesondere bei Werkzeugmaschinen, die eine Mehrzahl zueinander beweglicher Objekte enthalten, die in die Kollisionsüberwachung einbezogen werden könnten, lässt sich eine erhebliche Reduzierung des Rechenaufwandes dadurch erreichen, dass die Kollisionsüberwachung nicht auf die Relativbewegung solcher zueinander beweglicher Objekte erstreckt wird, bei denen eine Kollision aufgrund der Konstruktion der Werkzeugmaschine von vornherein ausgeschlossen ist. So kann etwa ein drehbar gelagerter Maschinentisch (Drehtisch) nicht mit einer den Drehtisch entlang einer Kreisbahn umgebenden, stationären Außenkabine kollidieren, da bei einer reinen Rotationsbewegung des Drehtisches der Abstand zwischen dem Drehtisch und der Außenkabine stets konstant bleibt. Eine Kollisionsüberwachung hinsichtlich dieser beiden Objekte würde dann unnötige Rechenzeit erfordern.

Ferner muss nicht zwingend jeweils ein ganzes, zusammenhängendes Objekt bzw. Maschinenteil einer Maschine von einer Hülle umschlossen sein. Sofern nur ein Teilbereich eines Objektes bzw. eines Maschinenteiles überhaupt für eine Kollision mit einem weiteren Objekt bzw. Maschinenteil in Frage kommt, kann dieser Teilbereich eines vollständigen Objektes bzw. Maschinenteiles als das zu überwachende Objekt angesehen werden und demnach nur dieser Teilbereich von einer Hülle umgeben sein. Unter dem zu überwachenden Objekt bzw. Maschinenteil wird daher immer diejenige Komponente bzw. Teilkomponente, z. B. einer Werkzeugmaschine, verstanden, die in eine Kollisionsüberwachung tatsächlich einzubeziehen ist und der demnach zur Modellierung einer entsprechenden Hülle zugeordnet wird.

Weitere Einzelheiten und Vorteile des erfindungsgemäßen Verfahrens werden bei der nachfolgenden Beschreibung eines Ausführungsbeispieles anhand der Figuren deutlich werden.

### Es zeigen:

- Figur 1: zwei zueinander bewegliche Objekte, denen zur Kollisionsüberwachung jeweils eine innere Hülle und eine äußere Hülle zugeordnet ist;
- Figur 2: eine Kollisionsüberwachung bei einer Relativbewegung der beiden Objekte aus Figur 1 entlang einer Bahnkurve unter Bezugnahme auf die jeweilige äußere Hülle;
- Figur 3: eine verfeinerte Kollisionsüberwachung bei der Bewegung der beiden Objekte aus Figur 1 in einem Teilabschnitt der Bahnkurve aus Figur 2 unter Bezugnahme auf die jeweilige innere Hülle;
- Figur 4: eine Illustration der mit einer Kollisionsüberwachung unter Zuordnung nur einer Hülle zum jeweiligen Objekt verbundenen Nachteile;
- Figur 5: eine Illustration einer Methode zur Ermittlung einer geeigneten Schrittweite beim Abfahren einer jeweiligen Bahnkurve.

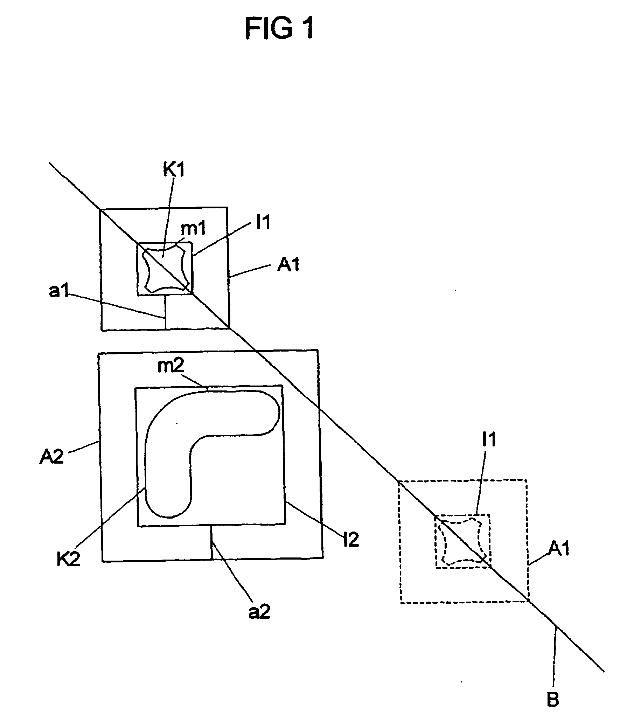

In Figur 1 sind zwei zueinander bewegliche Objekte in Form zweier Körper K1, K2 dargestellt, bei denen es sich beispielsweise um Maschinenteile einer Werkzeugmaschine handeln kann und die im Rahmen von der Maschine auszuführender Arbeitsschritte entlang einer durch die Maschinensteuerung vorgegebenen Bahnkurve B zueinander bewegt werden sollen.

Um festzustellen, ob es bei der vorgesehenen, durch die Maschinensteuerung vorgebbaren Relativbewegung der beiden Körper K1, K2 entlang der Bahnkurve B zu einer Kollision der beiden Körper K1, K2 käme, wird deren Relativbewegung vor der tatsächlichen Ausführung der entsprechenden Maschinenoperationen durch die Maschinensteuerung oder eine mit der Maschinensteuerung gekoppelte Rechnereinheit simuliert. Im vorliegenden Fall wird also vorab geprüft, ob bei einer Bewegung der beiden Körper K1, K2 entlang der Bahnkurve B eine Berührung der beiden Körper K1, K2 aufträte. In einem solchen Fall darf die entsprechende Maschinenoperation nicht ausgeführt werden.

Zur Durchführung dieser Kollisionsüberwachung in einer Simulation wird jedem der beiden zu überwachenden Körper K1, K2 eine innere Hülle I1, I2 sowie eine äußere Hülle A1, A2 zugeordnet. Dies dient der Vereinfachung der Kollisionsüberwachung, da aufgrund der im Allgemeinen komplizierten geometrischen Struktur zu überwachender Maschinenteile eine Kollisionsüberwachung anhand der tatsächlichen Geometrie des jeweils zu überwachenden Maschinenteiles einen zu großen Rechenaufwand zur Folge hätte.

Dementsprechend werden zur Kollisionsüberwachung vergleichsweise einfache geometrische (Hüll-)Körper, wie z. B. Kugeln, Quader, Zylinder, Prismen oder Pyramiden gewählt, die zur Modellierung bestimmter Maschinenteile wiederum miteinander kombiniert werden können. Für Einzelheiten hinsichtlich der Wahl geeigneter Modellierungen kollisionsgefährdeter Maschinenteile sowie geeigneter Algorithmen zur Ermittlung eines möglichen Überiapps der modellierten Maschinenteile sei beispielhaft auf den Artikel von G. Pritschow und M. Kremer in wt Werkstatttechnik online, Jahrgang 92, S. 218-222 (2002) sowie auf die dort zitierte Literatur verwiesen.

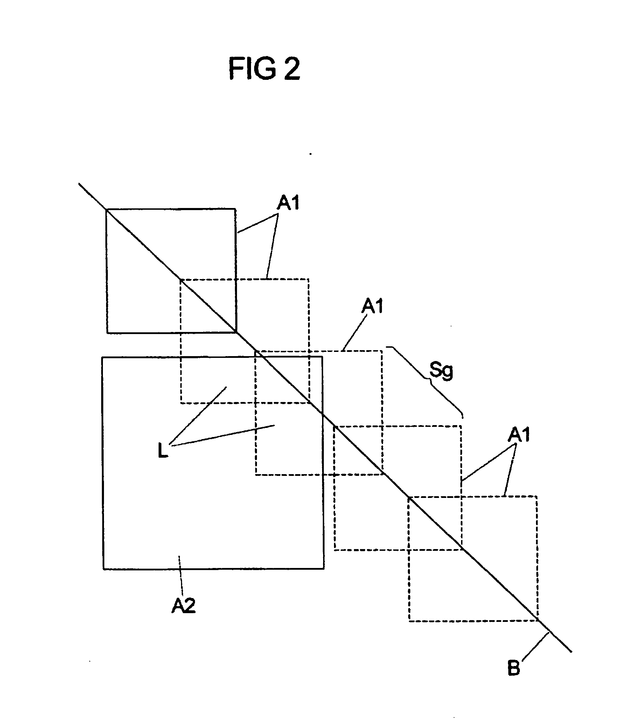

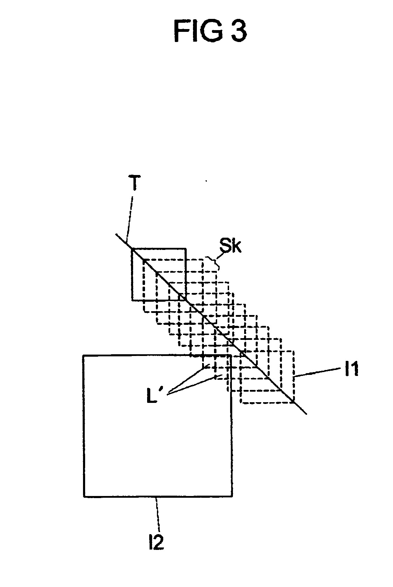

Eine Besonderheit des nachfolgend anhand der Figuren 2 und 3 zu beschreibenden Verfahrens zur Kollisionserkennung liegt darin, dass gemäß Figur 1 jedem der beiden zu überwachenden Körper K1, K2 nicht, wie im Stand der Technik üblich, nur eine einzelne den jeweiligen Körper modellierende Hülle zugeordnet ist, sondern vielmehr jeweils eine innere Hülle I1 bzw. 12 sowie eine äußere Hülle A1 bzw. A2. Dabei umschließt die jeweilige innere Hülle I1 bzw. I2 den zugeordneten Körper K1 bzw. K2 und weist von der äußeren Kontur des jeweils zugeordneten Körpers K1, K2 einen Mindestabstand M1 bzw. M2 auf. Die jeweilige äußere Hülle A1 bzw. A2 umschließt die innere Hülle I1 bzw. I2 des zugeordneten Körpers K1 oder K2 und weist von dieser einen definierten Mindestabstand a1 bzw. a2 auf. Falls die jeweilige innere Hülle und die zugeordnete äußere Hülle alternativ durch konzentrische Kreise gebildet würden, so wäre der letztgenannte Abstand für alle Punkte der jeweiligen Hüllen konstant.

Im Beispielsfall sind die zu überwachenden Körper K1, K2 jeweils als zweidimensionale Gebilde und die zugeordneten Hüllen I1, A1 und I2, A2 jeweils als Quadrate dargestellt, wobei die inneren Quadrate I1, I2 jeweils einen der Körper K1, K2 unmittelbar mit einem definierten Mindestabstand m1 bzw. m2 umschließen und die äußeren Quadrate A1, A2 jeweils ein zugeordnetes inneres Quadrat I1, I2 mit einem definierten Mindestabstand a1 bzw. a2 umgeben.

Verallgemeinert auf den dreidimensionalen Fall würden die Quadrate jeweils durch Würfel oder allgemeiner durch Quader ersetzt. Wie weiter oben ausgeführt, können jedoch auch andere Hüllkörper, z. B. Kugeln, Zylinder, Prismen oder Pyramiden sowie eine Kombination derartiger einfacher geometrischer Körper zur Modellierung zu überwachender Körper K1, K2 in Form konkreter Maschinenteile herangezogen werden.

Bei der Bahnkurve B, die die Relativpositionen der auf Kollision zu überwachenden Körper K1, K2 repräsentiert, handelt es sich vorliegend um eine Gerade. Das nachfolgend beschriebene Verfahren zur Kollisionsüberwachung lässt sich jedoch in gleicher Weise auch auf rotatorische Relativbewegungen zweier Körper sowie allgemein auf Relativbewegungen anwenden, die durch eine gekrümmte Bahnkurve beschrieben werden und die z. B. aus einer Kombination linearer und rotatorischer Bewegungen zusammengesetzt sind.

Bei der Durchführung der Kollisionsprüfung wird gemäß Figur 2 die Bahnkurve B zunächst mit einer vergleichsweise großen Schrittweite Sg durchfahren und das mögliche Auftreten einer Kollision zwischen den beiden relativ zueinander bewegten Körpern anhand eines Überlapps bzw. eines gegenseitigen Durchdringens der äußeren Hüllen A1 und A2 der auf Kollision zu untersuchenden Körper geprüft. Wird bei einem der Schritte ein derartiger Überlapp L zwischen den äußeren Hüllen A1, A2 festgestellt, so ist dies ein Hinweis, dass in einem Teilabschnitt der Bahnkurve B, in der der entsprechende Schritt ausgeführt wurde, die Gefahr einer Kollision der beiden zu überwachenden Körper besteht. Daraus folgt allerdings noch nicht, dass eine solche Kollision in dem entsprechenden Teilabschnitt der Bahnkurve B auch tatsächlich erfolgen würde; denn der aufgetretene Überlapp L kann auch ausschließlich auf die besondere Größe der äußeren Hüllen A1, A2 der zu überwachchenden Körper zurückzuführen sein.

Daher wird, wie in Figur 3 dargestellt, derjenige Teilabschnitt T der Bahnkurve B, in dem durch den Überlapp der äußeren Hüllen A1, A2 die Gefahr einer Kollision besteht, erneut mit einer kleineren Schrittweite Sk durchlaufen, wobei nun die Gefahr einer Kollision anhand des Überlapps der den beiden zu unteersuchenden Körpern zugeordneten kleineren, inneren Hüllen I1, I2 überprüft wird. Kommt es auch hierbei zu einem Überlapp L', so ist dies ein Hinweis, dass tatsächlich ein Risiko einer Kollision der beiden zu überwachenden Körper beim Abfahren der Bahnkurve B besteht und dass eine entsprechende Korrektur der Bahnkurve veranlasst werden muss, z. B. durch Neuprogrammierung einer Maschinensteuerung, wenn es sich bei den zueinander beweglichen Körpern um zwei Maschinenteile handelt, deren Relativbewegung durch die Maschinensteuerung bestimmt wird.

Konkret erfolgt die Festlegung eines jeweiligen Teilabschnittes T der Bahnkurve B, der erneut mit einer kleineren Schrittweite Sk durchlaufen wird, bevorzugt in der Weise, dass sie jeweils alle aufeinander folgenden Schritte der größeren Schrittweite Sg umfasst, denen beim ersten Abfahren der Bahnkurve B ein Überlapp L zwischen den äußeren Hüllen A1, A2 zugeordnet wurde. Ein Teilabschnitt T beginnt also jeweils am Ausgangspunkt eines ersten Schrittes größerer Schrittweite Sg, bei dem ein Überlapp L zwischen den äußeren Hüllen A1, A2 festgestellt wurde, und umfasst alle sich daran anschließenden Schritte der größeren Schrittweite Sg, bei denen ebenfalls ein Überlapp L zwischen den äußeren Hüllen A1, A2 festgestellt wurde - bis zu dem Ausgangspunkt des nachfolgenden ersten Schrittes größerer Schrittweite Sg, bei dem kein Überlapp L der beiden Körper K1, K2 festgestellt wurde. Die aufeinander folgenden Schritte der größeren Schrittweite Sg sind dabei (ebenso wie die aufeinander folgenden Schritte der kleineren Schrittweite Sk) so gewählt, dass sie unmittelbar aneinander anschließen. Die Schritte der großen Schrittweite Sg überdecken also die gesamte Bahnkurve B, entlang der die beiden zu überwachenden Körper K1, K2 zueinander bewegt werden, und zwar bevorzugt (jedoch nicht zwingend) ohne Überlapp der einzelnen Schritte. Entsprechendes gilt für die kleineren Schritte Sk bezogen auf den Teilabschnitt T der Bahnkurve B.

Im Grenzfall, dass lediglich während eines einzelnen Schrittes größerer Schrittweite Sg beim ersten Abfahren der Bahnkurve B ein Überlapp L zwischen den äußeren Hüllen A1, A2 festgestellt wurde, erstreckt sich der entsprechende Teilabschnitt T der Bahnkurve B genau zwischen den beiden Endpunkten jenes Schrittes größerer Schrittweite Sg. Falls bei mehreren aufeinander folgenden Schritten größerer Schrittweite Sg ein Überlapp L zwischen den äußeren Hüllen A1, A2 festgestellt wurde, erstreckt sich der Teilabschnitt T der Bahnkurve B zwischen dem Anfangspunkt des ersten Schrittes, bei dem ein Überlapp L festgestellt wurde, und dem Endpunkt des letzten Schrittes größerer Schrittweite Sg, bis zu dem fortdauernd ein Überlapp L ermittelt wurde.

Selbstverständlich können beim Abfahren der Bahnkurve B, die die Relativbewegung der beiden zu überwachenden Körper K1, K2 repräsentiert, mehrere Teilabschnitte T ermittelt werden, entlang derer beim Fortschreiten mit der ersten, größeren Schrittweite Sg jeweils ein fortdauernder Überlapp L zwischen den äußeren Hüllen A1, A2 festgestellt wird. Jeder dieser einzelnen Teilabschnitte T ist dann durch erneutes Abfahren mit der kleineren Schrittweite Sk genauer zu untersuchen.

Durch die vorstehend beschriebene Kollisionsüberwachung in Form einer ersten, groben Überwachung mit großer Schrittweite und entsprechend großen äußeren Hüllkörpern und einer zweiten, feineren Überwachung speziell der bei der ersten, groben Überwachung als kollisionsträchtig ermittelten Teilabschnitte der Bahnkurve lässt sich mit vergleichsweise geringem Rechenaufwand erreichen, dass die tatsächlich vorhandenen möglichen Kollisionen zuverlässig erfasst werden, wobei jedoch gleichzeitig verhindert wird, dass allein schon aufgrund des Überlapps der größeren, äußeren Hüllen, die ein Abfahren der relevanten Bahnkurve B mit großer Schrittweite Sg gestatten, eine Kollision angenommen und die laufende Maschinenoperation gestoppt wird.

Je nach Umfang der beim Betrieb einer Maschine zu erwartenden Relativbewegungen der zu überprüfenden Maschinenteile kann die grobe Kollisionsüberwachung komplett vor Beginn der vorgesehenen Maschinenoperationen durchgeführt werden oder dynamisch während der Ausführung der Maschinenoperationen - jedoch stets mit einem solchen zeitlichen Abstand vor einer jeweiligen Maschinenoperation, dass nach Auftreten eines Überlapps L zwischen den äußeren Hüllen A1, A2 der beteiligten Körper noch hinreichend Zeit zur Verfügung steht, um eine verfeinerte Kollisionsprüfung unter Bezugnahme auf deren inneren Hüllen I1, I2 vorzunehmen und in Abhängigkeit vom Ergebnis dieser verfeinerten Kollisionsprüfung eine Maschinenoperation, die zu einer Kollision führen würde, rechtzeitig abzubrechen.

Das Risiko, dass eine Maschine wegen einer irrtümlich ermittelten, bevorstehenden Kollision angehalten wird, ist umso geringer, je kleiner der Maximalabstand der inneren Hüllen I1, 12 von den zugeordneten Körpern K1, K2 ist, d. h., um so genauer die inneren Hüllen I1, I2 die zugeordneten, zu überwachenden Körper K1, K2 modellieren. Allerdings steigt bei genauerer Modellierung der für die Kollisionsüberwachung erforderliche Rechenaufwand, wobei zu berücksichtigen ist, dass die kleinere Schrittweite Sk um so kleiner gewählt werden muss, je kleiner der Mindestabstand der inneren Hüllen I1, I2 von den zugeordneten zu überwachenden Körpern ist. Im Grenzfall, in dem die inneren Hüllen die zugeordneten Körper so exakt modellieren, dass das Modell und der jeweils zu überwachende Körper faktisch zusammenfallen, müsste die verfeinerte Kollisionsüberwachung kontinuierlich, d. h. mit unendlich kleiner Schrittweite erfolgen.

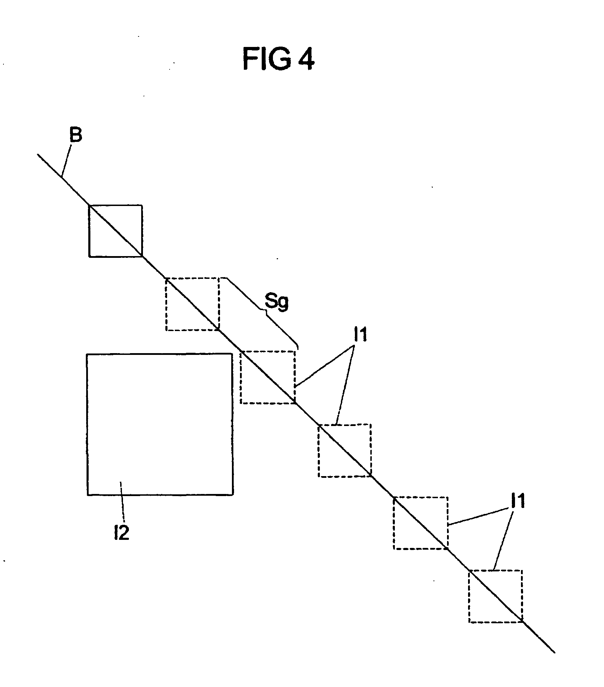

Anhand Figur 4 wird deutlich, dass ein Abfahren der Bahnkurve B, die die Relativbewegung der beiden auf Kollision zu überwachenden Körper beschreibt, mit der größeren Schrittweite Sg bei gleichzeitiger Verwendung der kleineren, inneren Hüllen I1, I2 als Bezugsobjekte für die Feststellung eines Überlapps zu einem Übergehen der gemäß den Figuren 2 und 3 aufgedeckten möglichen Kollision hätte führen können.

Es ist daher von Bedeutung, dass bei einem Abfahren der Bahnkurve B mit einer großen Schrittweite Sg auch entsprechend große Hüllkörper A1, A2 als Modelle für die überwachenden Körper verwendet werden und dass bei einer feineren Abtastung der Bahnkurve B unter Bezugnahme auf die kleineren, inneren Hüllen I1, 12 für die Feststellung eines Überlapps auch eine entsprechend kleine Schrittweite Sk herangezogen wird.

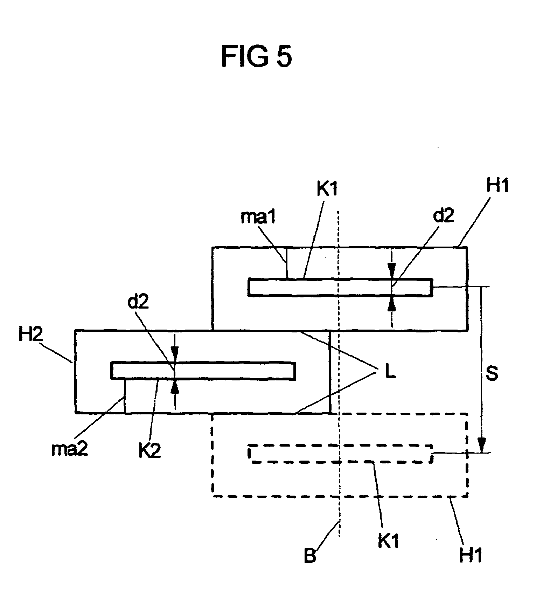

Anhand Figur 5 sind Erwägungen illustriert, auf deren Grundlage eine geeignete Schrittweite beim erstmaligen Abfahren der Bahnkurve B sowie beim späteren Abfahren des Teilabschnittes T der Bahnkurve B ermittelt werden kann.

Figur 5 geht dabei aus von einem "Worst-Case"-Szenario aus, also einem Kollisionsfall, bei dem eine besonders feine Schrittweite erforderlich ist, um die Kollision der zu überwachenden Körper K1, K2 bzw. einen Überlapp der zugeordneten Hüllen H1, H2 festzustellen. Die nachfolgenden Überlegungen gelten dabei vom Prinzip her sowohl für die Festlegung der ersten, großen Schrittweite Sg als auch für das Festlegen der zweiten, kleineren Schrittweite Sk. Die in Figur 5 mit H1 und H2 bezeichneten Hüllen können daher wahlweise für die äußeren Hüllen A1, A2 oder für die inneren Hüllen I1, I2 des anhand der Figuren 1 bis 3 dargestellten Verfahrens stehen.

In dem in Figur 5 dargestellten Szenario wird ausgegangen von zwei zu überwachenden Körper K1, K2 mit einer beliebig geringen Dicke d1 bzw. d2, also insbesondere vom Grenzfall d1 gegen Null gehend und d2 gegen Null gehend. Die Bahnkurve B, entlang der sich die beiden Körper K1, K2 zueinander bewegen, verläuft dabei senkrecht zur Erstreckung der beiden Körper K1, K2, d. h., dass die Ausdehnung d1 bzw. d2 der beiden Körper K1, K2 parallel zur Bahnkurve B äußerst gering ist bzw. gegen Null geht.

Ferner ist in Figur 5 angenommen, dass bei dem dort betrachteten Schritt des ersten Körpers K1 entlang der Bahnkurve B mit der Schrittweite S (welche für die kleinere Schrittweite Sk oder die größere Schrittweite Sg stehen kann) der zweite Körper K2 gerade in der Mitte zwischen dem Anfangspunkt und dem Endpunkt des besagten Schrittes der Schrittweite S liegt.

Die jeweilige Hülle H1, H2 umgibt dabei den zugeordneten Körper K1 bzw. K2 mit einem Mindestabstand ma1 bzw. ma2. Für den Fall, dass die jeweilige Hülle H1, H2 eine innere Hülle I1 bzw. I2 repräsentiert, entspricht jener Mindestabstand ma1, ma2 dem Mindestabstand m1 bzw. m2 zwischen der jeweiligen inneren Hülle I1 bzw. I2 und dem zugeordneten Körper K1, K2 aus den Figuren 1 bis 3. Für den Fall, dass es sich bei der jeweiligen Hülle H1, H2 aus Figur 2 um die äußere Hülle A1 bzw. A2 des Ausführungsbeispieles aus den Figuren 1 bis 3 handelt, entspricht der jeweilige Mindestabstand ma1, ma2 dem Mindestabstand zwischen dem jeweiligen Körper K1, K2 und der äußeren Hülle A1 bzw. A2.

Wie anhand Figur 5 deutlich wird, kollidiert der erste Körper K1 mit dem zweiten Körper K2, wenn sich der erste Körper K1 relativ zu dem zweiten Körper K2 entlang der Bahnkurve B bewegt. Eine solche Kollision muss selbstverständlich erfasst werden, wenn die Bahnkurve B mit diskreten, endlichen Schritten einer bestimmten Schrittweite S abgefahren wird, wobei eine Kollision zwischen den beiden Körpern K1, K2 anhand eines Überlappes der zugeordneten Hüllen H1, H2 festgestellt werden soll.

Figur 5 zeigt, dass zumindest ein minimaler (infinitesimaler) Überlapp L (also eine Berührung) zwischen den beiden Hüllen H1, H2 während des besagten Schrittes der Schrittweite S auftritt, wenn die Schrittweite S - im Grenzfall d1 gegen Null gehend und d2 gegen Null gehend - maximal gleich der Summe des Doppelten der beiden Mindestabstände ma1 und ma2 ist, also S ≤2 * ma1 + 2 * ma2.

Im (realen) Fall einer endlichen Ausdehnung der beiden Körper K1, K2 in Richtung der Bahnkurve B, also d1 > 0 und d2 > 0, könnte die Schrittweite S noch um den Betrag d1 + d2 größer gewählt werden. Vernachlässigt man aber die Ausdehnung der beiden Körper K1, K2 in Richtung der Bahnkurve B, so lässt sich mit der Regel S < 2 * ma1 + 2 * ma2 eine Vorschrift für die Schrittweite S angeben, mit der Kollisionen zwischen den beiden Körpern K1, K2 durch einen Überlapp L der entsprechenden Hüllen H1, H2 zuverlässig erkannt werden.

Bei der Anwendung dieser Regel ist allerdings zu beachten, dass bei gekrümmten Bahnenkurven und endlich ausgedehnten Körpern, z. B. bei Relativbewegungen, die durch eine Kreisbahn beschrieben werden, die einzelnen Punkte des jeweiligen Körpers, je nach dem Abstand vom Zentrum der entsprechenden gekrümmten Bewegung (z. B. Kreisbewegung), bei einem jeweiligen definierten Schritt mit einer unterschiedlichen Schrittweite bewegt werden. So ist etwa bei einer Bewegung entlang einer Kreisbahn die lokale Schrittweite für diejenigen Punkte eines Körpers am größten, die am weitesten vom Zentrum (Mittelpunkt) des Kreises entfernt sind, der die entsprechende Kreisbahn beschreibt. D. h., die Schrittweite ist bei gekrümmten Bahnkurven B, beispielsweise Kreisbahnen, im Allgemeinen ortsaufgelöst (lokal) für die einzelnen Punkte eines Körpers K zu beachten.

Regelmäßig wird eine im jeweiligen Einzelfall optimale Schrittweite durch eine Kombination mathematischer Abschätzungen, z. B. der vorstehend erwähnten Art, mit Erfahrungswerten ermittelt, insbesondere bei komplizierten Geometrien der zu überwachenden Körper sowie der Bahnkurve, entlang der die beiden Körper zueinander bewegt werden.

## Patentansprüche

1. Verfahren zur Ermittlung einer möglichen Kollision mindestens zweier zueinander beweglicher Objekte durch Simulation der vorgesehenen Relativbewegung der Objekte, bei der
- zumindest einem der Objekte eine das Objekt umschließende Hülle zugeordnet wird,
- die Bahnkurve, die die Relativbewegung der Objekte repräsentiert, mit Schritten einer definierten ersten Schrittweite abgefahren wird und
- zur Ermittlung einer möglichen Kollision der Objekte das Auftreten eines Überlapps der Objekte erfasst wird, wobei zumindest bei dem einen Objekt zur Erfassung eines Überlapps auf die zugeordnete Hülle Bezug genommen wird,
**dadurch gekennzeichnet, dass**
a) zumindest dem einen Objekt (K1, K2) eine innere und eine äußere Hülle (I1, A1; I2, A2) zugeordnet ist, von denen die innere Hülle (I1, I2) das eine Objekt (K1, K2) umgibt und die äußere Hülle (A1, A2) die innere Hülle (I1, I2) umgibt,
b) zur Erfassung eines Überlapps (L) der Objekte (K1, K2) auf die äu-ßere Hülle (A1, A2) des einen Objektes (K1, K2) Bezug genommen wird,
c) bei Erfassung eines Überlapps (L) in einem Abschnitt (T) der Bahnkurve (B) der Abschnitt (T) der Bahnkurve (B) erneut mit einer kleineren, zweiten Schrittweite (Sk) durchfahren wird und
d) beim erneuten Durchfahren des Abschnittes (T) der Bahnkurve (B) zur Erfassung eines Überlapps (L') auf die innere Hülle (I1, I2) zumindest eines der Objekte (K1, K2) Bezug genommen wird,
e) wobei die erste Schrittweite (Sg) bzw. die zweite Schrittweite (Sk) in Abhängigkeit vom Mindestabstand der äußeren Hülle (A1, A2) bzw. der inneren Hülle (I1, I2) vom jeweils zugeordneten Objekt (K1, K2) jeweils so festgelegt wird, dass mögliche Kollisionen sicher erkannt werden.

2. Verfahren nach Anspruch 1, **dadurch gekennzeichnet, dass** auch dem anderen Objekt (K2, K1) eine Hülle (I1, A1, I2, A2) zugeordnet ist, auf die zur Erfassung eines Überlapps (L, L') der Objekte (K1, K2) Bezug genommen wird.

3. Verfahren nach Anspruch 2, **dadurch gekennzeichnet, dass** auch dem anderen Objekt (K1, K2) eine innere Hülle (I1, I2) und eine äußere Hülle (A1, A2) zugeordnet ist, wobei beim Abfahren der Bahnkurve (B) mit der ersten Schrittweite (Sg) zur Bestimmung des Überlapps (L) auf die äußere Hülle (A1, A2) Bezug genommen wird und bei erneutem Abfahren eines Abschnittes (T) der Bahnkurve (B) mit der kleineren, zweiten Schrittweite (Sk) zur Bestimmung eines Überlapps (L') auf die innere Hülle (I1, I2) Bezug genommen wird.

4. Verfahren nach einem der vorhergehenden Ansprüche, **dadurch gekennzeichnet, dass** die innere Hülle (I1, I2) von allen Punkten der äußeren Kontur des zugeordneten Objektes (K1, K2) beabstandet ist.

5. Verfahren nach einem der vorhergehenden Ansprüche, **dadurch gekennzeichnet, dass** die äußere Hülle (A1, A2) von allen Punkten der inneren Hülle (I1, I2) des zugeordneten Objektes (K1, K2) beabstandet ist.

6. Verfahren nach einem der vorhergehenden Ansprüche, **dadurch gekennzeichnet, dass** die jeweilige Schrittweite (Sg, Sk) kleiner ist als das Doppelte des Mindestabstandes des einen Objektes (K1) von der zugeordneten äußeren oder inneren Hülle (A1, I1) zuzüglich des Doppelten des Mindestabstandes des anderen Objektes (K2) von der zugeordneten äußeren oder inneren Hülle (A2, I2).

7. Verfahren nach einem der vorhergehenden Ansprüche, **dadurch gekennzeichnet, dass** die jeweilige Schrittweite (Sg, Sk) in Abhängigkeit von dem Verlauf der die Relativbewegung repräsentierenden Bahnkurve (B) festgelegt wird.

8. Verfahren nach einem der vorhergehenden Ansprüche, **dadurch gekennzeichnet, dass** die Bahnkurve (B) gebildet wird durch lineare und/oder rotatorische Relativbewegungen der Objekte (K1, K2) zueinander.

9. Verfahren nach einem der vorhergehenden Ansprüche, **dadurch gekennzeichnet, dass** die Objekte (K1, K2) durch je eines von mindestens zwei zueinander beweglichen Maschinenteilen gebildet werden oder an je einem von mindestens zwei zueinander beweglichen Maschinenteilen angeordnet sind.

10. Verfahren nach Anspruch 9, **dadurch gekennzeichnet, dass** die Maschinenteile Bestandteile einer Werkzeugmaschine sind.

11. Verfahren nach Anspruch 9 oder 10, **dadurch gekennzeichnet, dass** nur solche Objekte (K1, K2) hinsichtlich einer möglichen Kollision überprüft werden, bei denen eine Kollision bei bestimmungsgemäßem Betrieb der Maschine physikalisch möglich ist.

12. Verfahren nach einem der vorhergehenden Ansprüche, **dadurch gekennzeichnet, dass** die Ermittlung einer möglichen Kollision der zueinander beweglichen Objekte anhand der Simulation mittels einer Maschinensteuerung durchgeführt wird.

13. Verfahren nach Anspruch 12, **dadurch gekennzeichnet, dass** die Maschinensteuerung ausgebildet und vorgesehen ist, in Abhängigkeit von dem Ergebnis der Simulation die reale Bewegung der mindestens zwei Objekte zu beeinflussen.

14. Verfahren nach Anspruch 12 oder 13, **dadurch gekennzeichnet, dass** die Maschinensteuerung eine Bewegung der realen Objekte zueinander erst freigibt, nachdem für die die Relativbewegung repräsentierende Bahnkurve (B) eine Kollisionsprüfung durchgeführt worden ist.

## Claims

1. Method for determining a possible collision at least of two objects moving towards each other by simulation of the intended relative movement of the objects, in which
- an envelope which surrounds the object is assigned at least to one of the objects,
- the path curve which represents the relative movement of the objects is covered in steps of a defined first step size and
- the occurrence of an overlap of the objects is detected in order to determine a possible collision of the objects, reference being made to the assigned envelope at least in the case of the one object in order to detect an overlap,
**characterised in that**
a) an inner and an outer envelope (I1, A1; I2, A2) is assigned at least to the one object (K1, K2), the inner envelope (I1, I2) of which surrounds the one object (K1, K2) and the outer envelope (A1, A2) of which surrounds the inner envelope (I1, I2),
b) reference is made to the outer envelope (A1, A2) of the one object (K1, K2) in order to detect an overlap (L) of the objects (K1, K2),
c) the portion (T) of the path curve (B) is covered again at a smaller, second step size (Sk) upon detection of an overlap (L) in one portion (T) of the path curve (B) and
d) reference is made to the inner envelope (I1, I2) at least of one of the objects (K1, K2) when the portion (T) of the path curve (B) is covered again in order to detect an overlap (L'),
e) the first step size (Sg) or the second step size (Sk) being established respectively as a function of the minimum spacing of the outer envelope (A1, A2) or of the inner envelope (I1, I2) from the respectively assigned object (K1, K2) such that possible collisions are detected reliably.

2. Method according to claim 1, **characterised in that** an envelope (I1, A1, I2, A2) is assigned also to the other object (K2, K1) and reference is made thereto for detecting an overlap (L, L') of the object (K1, K2).

3. Method according to claim 2, **characterised in that** an inner envelope (I1, I2) and an outer envelope (A1, A2) is assigned also to the other object (K1, K2), reference being made to the outer envelope (A1, A2) when covering the path curve (B) at the first step size (Sg) in order to determine the overlap (L), and reference being made to the inner envelope (I1, I2) when covering a portion (T) of the path curve (B) again at the smaller, second step size (Sk) in order to determine an overlap (L').

4. Method according to one of the preceding claims, **characterised in that** the inner envelope (I1, I2) is at a spacing from all the points of the outer contour of the assigned object (K1, K2).

5. Method according to one of the preceding claims, **characterised in that** the outer envelope (A1, A2) is at a spacing from all the points of the inner envelope (I1, I2) of the assigned object (K1, K2).

6. Method according to one of the preceding claims, **characterised in that** the respective step size (Sg, Sk) is smaller than twice the minimum spacing of the one object (K1) from the assigned outer ; or inner envelope (A1, I1) plus twice the minimum spacing of the other object (K2) from the assigned outer or inner envelope (A2, I2).

7. Method according to one of the preceding claims, **characterised in that** the respective step size (Sg, Sk) is established as a function of the course of the path curve (B) which represents the relative movement.

8. Method according to one of the preceding claims, **characterised in that** the path curve (B) is formed by linear and/or rotational relative movements of the objects (K1, K2) towards each other.

9. Method according to one of the preceding claims, **characterised in that** the objects (K1, K2) are formed by respectively one of at least two machine parts moving towards each other or are disposed on respectively one of at least two machine parts moving towards each other.

10. Method according to claim 9, **characterised in that** the machine parts are components of a machine tool.

11. Method according to claim 9 or 10, **characterised in that** only those objects (K1, K2) are tested with respect to a possible collision for which a collision is physically possible during specified operation of the machine.

12. Method according to one of the preceding claims, **characterised in that** the determination of a possible collision of the objects moving towards each other is implemented by simulation by means of a machine control unit.

13. Method according to claim 12, **characterised in that** the machine control unit is configured and provided in order to influence the actual movement of the at least two objects as a function of the result of the simulation.

14. Method according to claim 12 or 13, **characterised in that** the machine control unit allows a movement of the actual objects towards each other only after a collision test has been implemented for the path curve (B) which represents the relative movement.

## Revendications

1. Procédé de détermination d'une collision potentielle d'au moins deux objets déplaçables l'un par rapport à l'autre, par simulation du mouvement relatif prévu des objets, selon lequel
- une enveloppe entourant l'objet est associée à au moins l'un des objets,
- la trajectoire qui représente le mouvement relatif des objets est exécutée en pas d'une première longueur définie, et
- pour déterminer une collision potentielle des objets, on détecte l'apparition d'un chevauchement des objets et, au moins pour l'un des objets, on utilise comme référence l'enveloppe associée, afin de détecter un chevauchement,
**caractérisé par le fait que**
a) l'on associe à au moins l'un des objets (K1, K2) une enveloppe intérieure et une enveloppe extérieure (I1, A1; I2, A2), où l'enveloppe intérieure (I1, I2) entoure l'un des objets (K1, K2) et l'enveloppe extérieure (A1, A2) entoure l'enveloppe intérieure (I1, I2),
b) pour détecter un chevauchement (L) des objets (K1, K2), on utilise comme référence l'enveloppe extérieure (A1, A2) de l'un des objets (K1, K2),
c) lors de la détection d'un chevauchement (L) dans une portion (T) de la trajectoire (B), cette portion (T) de la trajectoire (B) est de nouveau parcourue avec une deuxième longueur de pas (Sk) plus faible, et
d) lors de la nouvelle exécution de la portion (T) de la trajectoire (B), on utilise l'enveloppe intérieure (I1, I2) d'au moins un des objets (K1, K2) pour détecter un chevauchement (L'),
e) où la première longueur de pas (Sg) et la deuxième longueur de pas (Sk) sont respectivement définies en fonction de la distance minimale de l'enveloppe extérieure (A1, A2) et de l'enveloppe intérieure (I1, I2) par rapport à l'objet (K1, K2) associé, de telle sorte que des collisions potentielles soient détectées de manière sûre.

2. Procédé selon la revendication 1, **caractérisé par le fait que** l'on associe également à l'autre objet (K2, K1) une enveloppe (I1, A1, I2, A2) qui sert de référence pour détecter un chevauchement (L, L') des objets (K1, K2).

3. Procédé selon la revendication 2, **caractérisé par le fait que** l'on associe également à l'autre objet (K1, K2) une enveloppe intérieure (I1, I2) et une enveloppe extérieure (A1, A2), et lors de l'exécution de la trajectoire (B), avec la première longueur de pas (Sg), on utilise l'enveloppe extérieure (A1, A2) comme référence pour déterminer le chevauchement (L), et lors de la nouvelle exécution d'une portion (T) de la trajectoire (B), avec la deuxième longueur de pas (Sk) plus faible, on utilise l'enveloppe intérieure (I1, I2) comme référence pour déterminer un chevauchement (L').

4. Procédé selon une des revendications précédentes, **caractérisé par le fait que** l'enveloppe intérieure (I1, I2) est espacée de tous les points du contour extérieur de l'objet (K1, K2) associé.

5. Procédé selon une des revendications précédentes, **caractérisé par le fait que** l'enveloppe extérieure (A1, A2) est espacée de tous les points de l'enveloppe intérieure (I1, I2) de l'objet (K1, K2) associé.

6. Procédé selon une des revendications précédentes, **caractérisé par le fait que** la longueur de pas (Sg, Sk) respective est inférieure au double de la distance minimale entre l'un des objets (K1) et l'enveloppe extérieure ou intérieure associée (A1, I1), additionné du double de la distance minimale de l'autre objet (K2) par rapport à l'enveloppe extérieure ou intérieure associée (A2, I2).

7. Procédé selon une des revendications précédentes, **caractérisé par le fait que** la longueur de pas (Sg, Sk) respective est définie en fonction du tracé de la trajectoire (B) représentant le mouvement relatif.

8. Procédé selon une des revendications précédentes, **caractérisé par le fait que** la trajectoire (B) est formée par des déplacements linéaires et/ou rotatoires des objets (K1, K2) l'un par rapport à l'autre.

9. Procédé selon une des revendications précédentes, **caractérisé par le fait que** les objets (K1, K2) sont constitués chacun d'un organe parmi au moins deux organes de machine déplaçables l'un par rapport à l'autre ou sont disposés chacun sur un organe parmi au moins deux organes de machine déplaçables l'un par rapport à l'autre.

10. Procédé selon la revendication 9, **caractérisé par le fait que** les organes de machine font partie d'une machine-outil.

11. Procédé selon la revendication 9 ou 10, **caractérisé par le fait que** l'on vérifie les risques de collision uniquement pour les objets (K1, K2) pour lesquels une collision est physiquement possible lors du fonctionnement normal de la machine.

12. Procédé selon une des revendications précédentes, **caractérisé par le fait que** la détermination d'une collision potentielle des objets mutuellement déplaçables est réalisée à l'aide de la simulation effectuée par une commande de machine.

13. Procédé selon la revendication 12, **caractérisé par le fait que** la commande de machine est conçue et prévue pour agir sur le mouvement réel des objets, au nombre d'au moins deux, en fonction du résultat de la simulation.

14. Procédé selon la revendication 12 ou 13, **caractérisé par le fait que** la commande de machine n'autorise un mouvement réciproque des objets réels qu'après exécution d'un contrôle de collision pour la trajectoire (B) représentant le mouvement relatif.
